# EUROPÄISCHE PATENTSCHRIFT

(11) **EP 3 567 175 B1**
(45) Veröffentlichungstag und Bekanntmachung des Hinweises auf die Patenterteilung: **25.03.2020**
(21) Anmeldenummer: 19150750.8
(22) Anmeldetag: 07.05.2018
(51) Int. Cl.: E04B 1/68, E06B 1/62

(54) **VERFAHREN ZUR HERSTELLUNG VON DICHTBANDROLLEN**
METHOD FOR THE PREPARATION OF SEALING STRIP ROLLS
PROCÉDÉ DE FABRICATION DE ROULEAUX DE BANDES D'ÉTANCHÉITÉ

(43) Veröffentlichungstag der Anmeldung: 13.11.2019
(62) Teilanmeldung aus: 18170977.5
(73) Patentinhaber: ISO-Chemie GmbH, 73431 Aalen (DE)
(72) Erfinder:
(74) Vertreter: Wächter, Jochen

(56) Entgegenhaltungen:
- EP-A1- 2 990 552
- DE-U1-202010 008 331

## Beschreibung

Die vorliegende Erfindung betrifft ein Verfahren zur Herstellung von Dichtbandrollen aus weichem, komprimierbarem Schaumstoff mit mindestens einer außenliegenden Sperrschicht.

Dichtbänder werden zum Abdichten von Fugen, beispielsweise zwischen einem Rahmenprofil eines Fensters oder einer Tür und einer Gebäudewand verwendet, um die Fugen gegen Luftzug und Schlagregen abzudichten. Zudem gewährleisten die Dichtbänder eine Wärmedämmung im Bereich der Fuge, die das Rahmenprofil umgibt. Zusätzlich vorgesehene Folien oder Schichten, die an einer Seitenfläche desselben vorgesehen sind, erhöhen zudem den Dampfdiffusionswiderstand des Dichtbands. Derartige Folien oder Schichten werden daher häufig als Sperrschichten bezeichnet. Zur platzsparenden Lagerung und einfacheren Handhabung werden solche Dichtbänder komprimiert zu Dichtbandrollen aufgewickelt und erst unmittelbar vor dem Anbringen eines Dichtbands an einem Rahmenprofil von der Dichtbandrolle abgewickelt und auf die gewünschte Länge zugeschnitten.

Die Herstellung solcher Dichtbänder bzw. Dichtbandrollen ist bisweilen sehr aufwändig, da die Sperrschicht gesondert auf jedes zu einer Dichtbandrolle aufzuwickelnde Dichtband aufzubringen ist.

Alternative Dichtbänder sind bekannt, bei denen mindestens eine Sperrschicht zum Schutz der Sperrschicht vor Beschädigungen innerhalb des Dichtbands, also zwischen zwei aneinander angrenzenden Schaumstoffstreifen aufgenommen ist. Das Einbringen einer Sperrschicht ist jedoch ebenfalls sehr aufwändig und das gleichmäßige Aufbringen der Sperrschicht über den gesamten Dichtbandquerschnitt ist nur schwer kontrollierbar.

DE 20 2010 008 331 U1 offenbart einen Schaumstoffstreifen, der zu einer Rolle aufgewickelt ist, deren Stirnseite mit einer wasserlöslichen Beschichtung versehen ist. Zur Herstellung der Rolle werden in diesem Dokument keine Angaben gemacht.

EP 2 990 552 A1 offenbart ein Verfahren zur Herstellung einer Dichtbandrolle aus weichem, komprimiertem Schaumstoff mit mindestens einer in radialer Richtung verlaufenden Sperrschicht, die axial zwischen zwei Schichten aus Schaumstoff angeordnet ist. Dabei werden in einem Zwischenschritt durchgängige Schnitte in eine kaschierte Schaumstoffbahn in einer Längsrichtung der kaschierten Schaumstoffbahn gemacht, um Schaumstoffstreifen zu erzeugen, die mit Sperrschichten versehen sind.

Es ist eine Aufgabe der vorliegenden Erfindung, ein Verfahren zur Herstellung von Dichtbandrollen vorzuschlagen, mit dem Dichtbandrollen mit mindestens einer außenliegenden Sperrschicht möglichst einfach und kostengünstig gefertigt werden können.

Diese Aufgabe wird durch die Merkmale des Anspruchs 1 gelöst.

Erfindungsgemäß umfasst das Verfahren zur Herstellung von Dichtbandrollen aus weichem, komprimierbarem Schaumstoff mit mindestens einer außenliegenden, radial verlaufenden Sperrschicht die folgenden Schritte in der angegebenen Reihenfolge: Bereitstellen einer Schaumstoffbahn aus weichem Schaumstoff, wobei die auf eine Vorratsrolle aufgewickelte Schaumstoffbahn eine Länge zwischen 3 m und 300 m sowie eine Breite zwischen 0,03 m und 3 m aufweist; Bilden einer Schaumstoff-Sperrschicht-Bahn durch Aufbringen einer Sperrschicht auf eine Oberseite und/oder Unterseite der Schaumstoffbahn; Erzeugen einer Mehrzahl von Dichtbandstreifen durch Einbringen von mindestens einem durchgängigen Schnitt in die Schaumstoff-Sperrschicht-Bahn in einer Längsrichtung der Schaumstoff-Sperrschicht-Bahn und senkrecht zu der mindestens einen Sperrschicht; und Aufwickeln jedes Dichtbandstreifens der Mehrzahl von Dichtbandstreifen zu einer Rolle derart, dass die mindestens eine Sperrschicht radial verläuft und an einer der beiden axialen Stirnflächen der Rolle angeordnet ist.

So kann auf einfache Art und Weise eine Vielzahl von Dichtbandrollen mit mindestens einer Sperrschicht hergestellt werden. Das Sperrschichtmaterial und somit die Sperrschicht können großflächig auf die gesamte Ober- und/oder Unterseite der Schaumstoffbahn aufgetragen werden. Dies bietet den Vorteil, dass die Ober- und Unterseite der Schaumstoffbahn gut zugänglich und einsehbar sind, sodass das Aufbringen der Sperrschicht sowie die Qualität der aufgebrachten Sperrschicht gut kontrollierbar sind. Vorzugsweise wird die Sperrschicht auf die Schaumstoffbahn aufkaschiert. Durch das gleichmäßige Aufbringen der Sperrschicht auf der gesamten Schaumstoffbahn ist zudem gewährleistet, dass die Sperrschicht auch in Randbereichen der nachfolgend erzeugten Dichtbandstreifen gleichmäßig ausgebildet ist. Weiterhin bietet das Verfahren den Vorteil, dass ohne großen Mehraufwand eine Vielzahl von Dichtbandrollen gleichzeitig hergestellt werden können. Ein aufwändiges Aufbringen einzelner Sperrschichten auf einzelne Dichtbandstreifen oder das Einbringen einer Sperrschicht zwischen aneinander angrenzende Schaumstoffstreifen ist nicht notwendig.

Zu Dichtbandrollen aufgewickelte Dichtbandstreifen eignen sich ferner besonders gut für eine platzsparende Lagerung und den Transport der Dichtbänder. Der Komprimierungsgrad beträgt dabei üblicherweise mehr als 25% bezogen auf die Schaumausgangshöhe. In bevorzugten Ausführungsformen sind die Dichtbandstreifen mit einem vorgegebenen Komprimierungsgrad geringer als 25%, vorzugsweise geringer als 20%, noch mehr bevorzugt geringer als 15% bezogen auf die Schaumausgangshöhe und/oder höher als 5% bezogen auf die Schaumausgangshöhe zu Rollen aufgewickelt.

Vorzugsweise umfasst das Bilden der Schaumstoff-Sperrschicht-Bahn das Aufbringen einer Sperrschicht auf die Oberseite und die Unterseite der Schaumstoffbahn, und das Aufwickeln jedes Dichtbandstreifens der Mehrzahl von Dichtbandstreifen zu einer Rolle erfolgt derart, dass an jeder beiden axialen Stirnflächen der Rolle jeweils eine Sperrschicht angeordnet ist. Auf diese Weise hergestellt Dichtbänder weisen zwei gegenüberliegende Sperrschichten auf, die im Einbauzustand einer Rauminnenseite bzw. einer Raumaußenseite zugewandt sind. Dadurch können die Dichteigenschaften, insbesondere der Dampfdiffusionswiderstand des Dichtbands, besonders gut an die gegebenen Anforderungen angepasst werden. Die zwei Sperrschichten können aus demselben Material oder aus unterschiedlichen Sperrschichtmaterialien gebildet sein. Die zwei Sperrschichten können insbesondere unterschiedliche Eigenschaften wie z.B. einen unterschiedlichen Dampfdiffusionswiderstand aufweisen. Dadurch kann z.B. im Einbauzustand des Dichtbands ein Diffusionsgefälle zwischen der Rauminnenseite und der Raumaußenseite eingestellt werden.

Der Einbauzustand des Dichtbands ist dabei als der Zustand definiert, in dem das Dichtband in der Fuge zwischen dem Rahmenprofil und dem Mauerwerk angeordnet ist. Dabei erstreckt sich die Längsrichtung des Dichtbands entlang der umlaufenden Fuge und das Dichtband liegt flächig an dem Rahmenprofil und an dem Mauerwerk an. Eine Seitenfläche des Dichtbands ist dann der Rauminnenseite und die gegenüberliegenden Seitenfläche der Raumaußenseite zugewandt. Mindestens eine dieser beiden der Rauminnenseite oder der Raumaußenseite zugewandten Seitenflächen weist dabei eine Sperrschicht auf.

Wenn an jeder der beiden axialen Stirnflächen der Rolle jeweils eine Sperrschicht angeordnet ist, ist es bevorzugt, wenn das Verfahren weiterhin das Durchtrennen der Rolle durch Einbringen eines radialen Schnitts an einer Stelle axial zwischen den beiden Stirnflächen der Rolle zur Bildung von zwei Dichtbandrollen umfasst. Dies bietet den Vorteil, dass aus einem Dichtbandstreifen zwei Dichtbandrollen mit jeweils einer außen liegenden, radial verlaufenden Sperrschicht gebildet werden können. Dadurch kann das Verfahren zur Herstellung von Dichtbandrollen noch einfacher und effektiver gestaltet werden.

Besonders bevorzugt werden die Schaumstoffbahn und die Schaumstoff-Sperrschicht-Bahn in eine Förderrichtung bewegt, die parallel zu einer Längsrichtung der Schaumstoffbahn und der Schaumstoff-Sperrschicht-Bahn ausgerichtet ist. Vorzugsweise werden die mindestens eine Schaumstoffbahn und die Schaumstoff-Sperrschicht-Bahn kontinuierlich in Förderrichtung bewegt. Alternativ können die mindestens eine Schaumstoffbahn und die Schaumstoff-Sperrschicht-Bahn auch getaktet in Förderrichtung bewegt werden. Durch das Bewegen der mindestens einen Schaumstoffbahn und der Schaumstoff-Sperrschicht-Bahn wird erreicht, dass diese vorteilhaft einzelne Bearbeitungsstationen durchlaufen, an denen jeweils ein Verfahrensschritt durchgeführt wird. Insbesondere ist es möglich, die mindestens eine Schaumstoffbahn und die mindestens eine Sperrschicht auf Vorratsrollen in großen Längen und dennoch platzsparend bereitzustellen und dadurch die Produktivität des Herstellungsprozesses zu erhöhen.

In einer Ausführungsform wird mindestens ein Dichtbandstreifen der Mehrzahl von Dichtbandstreifen vor dem Aufwickeln des Dichtbandstreifens um 90° bzw. 270° um seine Längsachse gedreht, wodurch erreicht wird, dass der Dichtbandstreifen für nachfolgende Schritte, wie z. B. zum Aufwickeln zu einer Rolle, in der richtigen Anordnung vorliegt.

Es ist auch möglich, dass mindestens ein Dichtbandstreifen der Mehrzahl von Dichtbandstreifen vor dem Aufwickeln des Dichtbandstreifens zu einer Rolle derart umgelenkt wird, dass er schräg, bevorzugt senkrecht, zur Förderrichtung verläuft. Dadurch erfolgt das Aufwickeln des mindestens einen Dichtbandstreifens beabstandet von dem mindestens einen anderen Dichtbandstreifen, ohne dass sich diese beeinflussen. Dies bietet insbesondere Vorteile bei der Gestaltung einer Vorrichtung zur erfindungsgemäßen Herstellung von Dichtbandrollen, an der die Werkzeuge für jeden Verfahrensschritt zu lagern sind.

Besonders bevorzugt umfasst das Verfahren das Aufbringen eines Klebestreifens auf eine Seitenfläche jedes Dichtbandstreifens der Mehrzahl von Dichtbandstreifen, sodass der Klebestreifen senkrecht zu der mindestens einen Sperrschicht des Dichtbandstreifens angeordnet ist. Der Klebestreifen wird beispielsweise durch ein doppelseitiges Klebeband gebildet, das mit einer Seite mit dem Dichtbandstreifen verklebt wird. Auf der vom Dichtbandstreifen abgewandten Seite kann der Klebestreifen einen Abdeckstreifen, beispielsweise aus Silikonpapier oder ähnlichen Materialien, aufweisen. Der Abdeckstreifen verhindert, dass der Dichtbandstreifen an ungewollten Stellen, z.B. den benachbarten Windungen einer Dichtbandrolle, anhaftet. Der Klebestreifen dient der Befestigung des Dichtbands am Fenster- oder Türrahmen im Einbauzustand. Hierzu ist der Klebestreifen immer auf einer Seitenfläche des Dichtbandstreifens anzuordnen, die senkrecht zu der Seitenfläche ausgerichtet ist, die die Sperrschicht aufweist. Vor dem Anbringen des Dichtbands am Fenster-oder Türrahmen ist, falls vorhanden, der Abdeckstreifen zu entfernen. Zum Aufbringen des Klebestreifens auf den Dichtbandstreifen kann es besonders vorteilhaft sein, den Dichtbandstreifen vor dem Aufbringen des Klebestreifens um 90° bzw. 270° um seine Längsachse zu drehen.

Weiterhin umfasst das Verfahren vorzugsweise das Imprägnieren der mindestens einen Schaumstoffbahn vor dem Aufbringen der mindestens einen Sperrschicht. Das Imprägnieren der Schaumstoffbahn umfasst wiederum das Tränken der Schaumstoffbahn in einem Imprägnat und das nachfolgende Trocknen der Schaumstoffbahn. Durch das Imprägnieren können die Eigenschaften des Schaumstoffs beeinflusst werden. Insbesondere wird durch das Imprägnieren eine verzögerte Rückstellung des Schaumstoffs nach dessen Komprimierung erreicht. Alternativ ist es möglich, erst nach dem Aufbringen der mindestens einen Sperrschicht die gebildete Schaumstoff-Sperrschicht-Bahn zu imprägnieren. Das Imprägnieren der Schaumstoffbahn hat jedoch den Vorteil, dass zu diesem Zeitpunkt noch keine Sperrschicht das Eindringen des Imprägnats in den Schaumstoff behindert.

Schließlich ist es besonders bevorzugt, dass jede Sperrschicht durch eine Folienbahn, ein Klebeband oder ein klebstoffartiges Medium oder eine Kombination hiervon gebildet ist. Das Aufbringen der Sperrschicht erfolgt vorzugsweise durch Aufkaschieren derselben.

Im Falle mehrerer Schaumstoffbahnen eignet sich die Sperrschicht vorteilhafterweise dazu, zwei aneinander angrenzende Schaumstoffbahnen miteinander zu verbinden. Beispielsweise können zwei aneinander angrenzende Schaumstoffbahnen mittels der Sperrschicht aufeinander laminiert werden. Es ist aber auch denkbar, die Sperrschicht mit der jeweils mindestens einen angrenzenden Schaumstoffbahn mittels eines zusätzlichen Verbindungsmittels zu verbinden, beispielsweise zu verkleben.

Jede der hierin beschriebenen Schaumstoffbahnen kann aus jedem beliebigen offenzelligen oder geschlossenzelligen Weichschaumstoff gebildet sein, zum Beispiel aus Polyurethan oder Polyethylen, und kann für eine verzögerte Rückstellung nach Kompression imprägniert sein. Das Raumgewicht derartiger Weichschaumstoffe liegt zwischen 20 und 200 kg/m³.

Vorzugsweise weist der Weichschaum eine Stauchhärte von mehr als 2 kPa auf. Bevorzugt liegt die Stauchhärte bei mehr als 2,1 kPa, mehr bevorzugt bei mehr als 2,2 kPa, besonders bevorzugt bei mehr als 2,3 kPa. Die Stauchhärte beträgt vorzugsweise weniger als 4 kPa, bevorzugt weniger als 3,8 kPa und mehr bevorzugt weniger als 3,6 kPa. Die Stauchhärte ist ein Maß für die Festigkeit des Schaumstoffes. Die hier angegebenen Werte sind dabei auf eine Kompression von 40% gegenüber der Ausgangshöhe bezogen Die Stauchhärte wird bestimmt nach DIN EN ISO 3386, es wird der CV40 angegeben.

Die Dichtbänder werden vorzugsweise zur verzögerten Rückstellung wenigstens teilweise und bevorzugt vollständig mit einem Imprägniermittel imprägniert. Das Imprägniermittel weist vorzugsweise eine Acrylatdispersion auf. Bei einer vorteilhaften Ausführungsform weist die Acrylatdispersion in homogener Phase dispergierte Acrylatpolymerteilchen auf. Besonders bevorzugt ist der Schaumstoff mit einem Gewichtsanteil an Acrylatdispersion zur verzögerten Rückstellung derart imprägniert, dass das Dichtband bei 20°C und 50% relativer Luftfeuchtigkeit eine Rückstellung in weniger als 24 Stunden von einem Kompressionsgrad des Dichtbandes von ca. 9% bis 13% bis zum Fugenverschluss aufweist.

Bevorzugt durchläuft jede Schaumstoffbahn oder die Schaumstoff-Sperrschicht-Bahn die Schritte der Imprägnierung des Schaumstoffes mit einer wässrigen Polyacrylatdispersion und eine sich hieran anschließende Trocknung.

Bevorzugt weist ein zur verzögerten Rückstellung imprägnierter Schaumstoff bzw. Dichtbandstreifen eine Luftdurchlässigkeit in einem Bereich von 50 bis 1.000 l/(m²s), mehr bevorzugt zwischen 60 und 600 l/(m²s) und besonders bevorzugt zwischen 80 und 400 l/(m²s) auf. Die im Rahmen dieser Anmeldung getätigten Angaben zur Luftdurchlässigkeit beziehen sich auf eine Bestimmung unter den Normbedingungen eines 10 mm dicken Schaumstückes (vollständig entspannt) bei einem Messunterdruck von 1,0 bar, Prüffläche 100 cm²; Frank-Gerät 21443; DIN ISO 9237.

Jede der hierin beschriebenen Sperrschichten kann aus einem folienartigen Material, z.B. einer Polyamidfolie oder einem Klebstoff, z.B. einem Dispersionsklebstoff, insbesondere einem Acrylatklebstoff gebildet sein.

In einer besonders bevorzugten Ausführungsform ist jede Sperrschicht feuchtevariabel ausgebildet. d.h. ihr Wasserdampfdiffusionswiderstand ändert sich in Abhängigkeit von der Luftfeuchtigkeit der die Sperrschicht umgebenden Umgebung. Kennzeichnend für den Wasserdampfdiffusionswiderstand ist der Wasserdampfdiffusionswert bezogen auf eine Luftschichtdicke in Metern, der sogenannte sD-Wert.

Vorzugsweise weist eine Sperrschicht einen sD-Wert von 0,05 m bis 100 m, mehr bevorzugt von 0,1 m bis 25 m oder von 0,2 m bis 15 m auf (bei 25% relativer Luftfeuchtigkeit (rel. LF)). Die Prüfung des sD-Wertes erfolgt nach DIN EN ISO 12572. Unabhängig hiervon oder in Kombination hiermit kann die Sperrschicht einen sD-Wert von 0,02 m bis 10 m oder 0,03 m bis 6 m oder 0,05 m bis 2 m bei 72,5% rel. LF aufweisen, gemäß DIN EN ISO 12572. Beispielsweise kann der sD-Wert bei 25% rel. LF im Bereich von 1 bis 10m und bei 72,5% rel. LF im Bereich von 0,1 bis 5m liegen. Sofern nach DIN EN ISO 12572 nichts anderes bestimmt, beziehen sich die sD-Werte auf eine Temperatur von 20°C.

Der sD-Wert einer Sperrschicht bei 25% einerseits und bei 72,5% relativer Luftfeuchtigkeit andererseits (jeweils bei 20°C) unterscheidet sich vorzugsweise um einen Faktor von ≥ 1,1-1,2, vorzugsweise ≥ 1,5-2, gegebenenfalls bis zu einem Faktor von 3 bis 5 oder bis 10 bis 20 oder auch bis 50 oder bis 100 oder 150 oder darüber hinaus, wodurch die Abhängigkeit der Wasserdampfdiffusion der Sperrschicht von der Luftfeuchtigkeit definiert wird. Die Differenz beider sD-Werte der Sperrschicht bei den beiden angegebenen relativen Luftfeuchtigkeiten kann ≥ 0,25 m oder ≥ 0,5 m oder vorzugsweise ≥ 0,75-1 m betragen, beispielsweise bis zu 5-10 m oder bis zu 20-25 m oder darüber hinaus. Hierdurch ergibt sich bei verschiedenen Umgebungsbedingungen, beispielsweise im Sommer oder Winter oder in unterschiedlichen Klimazonen, eine ausreichende Abhängigkeit des Wasserdampfdiffusionswiderstandes, um auch bei unterschiedlicher relativer Luftfeuchtigkeit der Umgebung eine ausreichende Anpassung des Wasserdampfdiffusionswiderstandes an die Umgebungsbedingungen zu erzielen. Der sD-Wert bei 25% rel. Luftfeuchtigkeit ist hierbei vorzugsweise jeweils der höhere Wert gegenüber dem bei 72,5% Luftfeuchtigkeit.

Vorzugsweise besteht die Sperrschicht mindestens teilweise aus einem synthetischen, wasserquellbaren Polymer.

Eine Sperrschicht weist eine Dicke von 1 µm bis 1 mm auf, vorzugsweise eine Dicke von 1 bis 500 µm oder 2 bis 250 µm, besonders bevorzugt im Bereich von 5 bis 100 µ oder 5 bis 50 µ.

Die Sperrschicht kann auch mehrlagig, insbesondere als eine mehrlagige Verbundschicht ausgebildet sein. Ein- oder beidseitig der Funktionsschicht kann jeweils mindestens eine Lage mindestens eines weiteren Materials angeordnet sein. Die eine oder beiden weiteren Lagen, welche die Funktionsschicht jeweils teilweise oder vollständig bedecken, können diese schützen und tragen bzw. unterstützen und die Stabilität der Sperrschicht erhöhen. Die einzelnen Lagen können jeweils aus gleichem oder verschiedenem Material bestehen.

Die ein- oder beidseitig angeordneten Lagen können insbesondere Vliese, Gewebe oder Gitter aus inerten Stoffen wie Polyethylen, Polypropylen, Polyester, Glasfasern oder Viskose sein, gegebenenfalls auch perforierte Folien, insbesondere solche aus Polyethylen, Polypropylen oder Polyester. Die Schichten können allgemein aus jedem geeigneten Material bestehen, welches in Schichtform vorliegt und vorzugsweise keine höheren sD-Werte hat als die Funktionsschicht. Die ein- oder beidseitig angeordneten Lagen können aus einem Dispersionsklebstoff bestehen, insbesondere einem Acrylatkleber.

Die Dicke der die Funktionsschicht umgebenden Schichten der Sperrschicht können insgesamt je Seite unabhängig voneinander eine Dicke von 10-2.000 µm, vorzugsweise 10-500 µm, insbesondere 10-250 µm, besonders bevorzugt 10-90 µm betragen.

Die Sperrschicht bildet allgemein im Rahmen der Erfindung vorzugsweise eine durchgehend, nicht poröse und nicht-perforierte Schicht, besonders bevorzugt ist diese mindestens im Wesentlichen luftundurchlässig. Die Luftdurchlässigkeit der Sperrschicht bzw. Sperrlage kann ≤ 3-6 l/(m²s) oder vorzugsweise ≤ 1-2 l/(m²s) oder ≤ 0,2-0,5 l/(m²s) oder besonders bevorzugt ≤ 0,1-0,3 l/(m²s) nach DIN EN ISO 9237; Prüffläche 100 cm² bei einem Messdruck (Unterdruck) von 1,0 mbar, Prüfgerät Frank 21443, betragen oder nicht messbar sein. Weitere Merkmale und Vorteile der vorliegenden Erfindung ergeben sich aus der nachfolgenden Beschreibung unter Bezugnahme auf die Zeichnungen.
- Fig. 1: zeigt beispielhaft das Aufbringen einer Sperrschicht auf eine Schaumstoffbahn zum Bilden einer Schaumstoff-Sperrschicht-Bahn im Rahmen des erfindungsgemäßen Verfahrens in einer isometrischen Ansicht;
- Fig. 2: zeigt beispielhaft das Einbringen von durchgängigen Schnitten in die Schaumstoff-Sperrschicht-Bahn nach Fig. 1 sowie das Aufwickeln eines Dichtbandstreifens zu einer Rolle im Rahmen des erfindungsgemäßen Verfahrens in einer isometrischen Ansicht;
- Fig. 3: zeigt beispielhaft das Aufbringen einer ersten Sperrschicht und einer zweiten Sperrschicht auf eine Schaumstoffbahn zum Bilden einer SchaumstoffSperrschicht-Bahn im Rahmen einer alternativen Ausführungsform des erfindungsgemäßen Verfahrens in einer isometrischen Ansicht;
- Fig. 4: zeigt das Einbringen von durchgängigen Schnitten in die SchaumstoffSperrschicht-Bahn nach Fig. 3 sowie das Aufwickeln eines Dichtbandstreifens zu einer Rolle und Durchtrennen der Rolle im Rahmen der alternativen Ausführungsform des erfindungsgemäßen Verfahrens in einer isometrischen Ansicht;
- Fig. 5: zeigt beispielhaft das Bilden einer mehrlagigen Schaumstoff-Sperrschicht-Bahn bestehend aus einer Mehrzahl von Schaumstoffbahnen und einer Mehrzahl von Sperrschichten im Rahmen einer alternativen Ausführungsform eines nicht erfindungsgemäßen Verfahrens in einer isometrischen Ansicht;
- Fig. 6a: zeigt einen Einbauzustand einer Ausführungsform eines erfindungsgemäß hergestellten Dichtbands in einer schematischen Querschnittsansicht; und
- Fig. 6b: zeigt einen Einbauzustand einer alternativen Ausführungsform eines nicht erfindungsgemäß hergestellten Dichtbands in einer schematischen Querschnittsansicht.

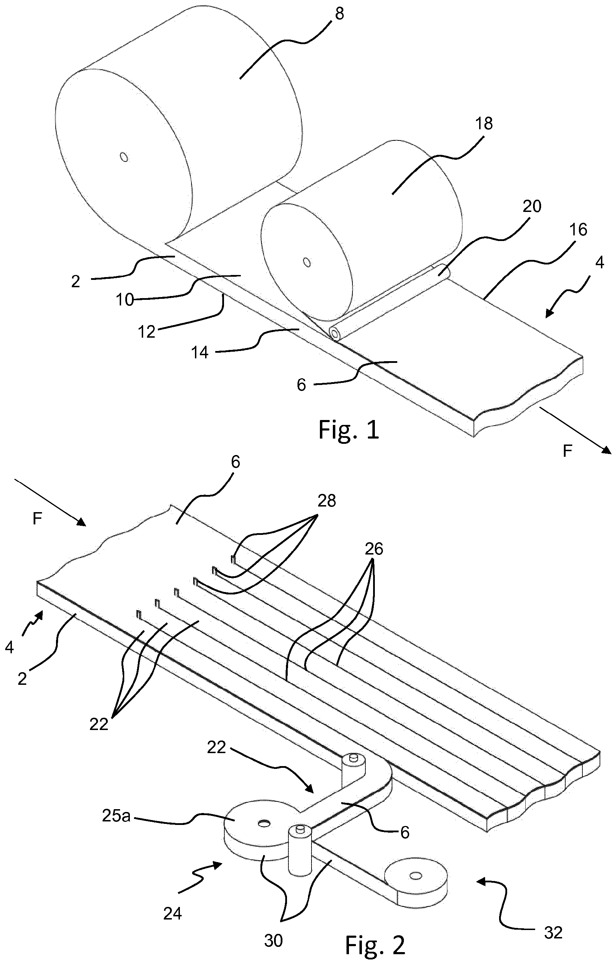

Fig. 1 zeigt beispielhaft das Bereitstellen einer Schaumstoffbahn 2 aus weichem Schaumstoff und das Bilden einer Schaumstoff-Sperrschicht-Bahn 4 durch Aufbringen einer Sperrschicht 6 auf die Schaumstoffbahn 2 im Rahmen einer ersten Ausführungsform des erfindungsgemäßen Verfahrens.

Die Schaumstoffbahn 2 besteht aus einem weichen Schaumstoff, beispielsweise einem offenzelligen Weichschaum aus Polyurethan. Die Schaumstoffbahn 2 wird auf einer Vorratsrolle 8 bereitgestellt, auf der die Schaumstoffbahn 2 mit beliebiger Länge aufgewickelt ist. Das Bereitstellen der Schaumstoffbahn 2 auf einer Vorratsrolle 8 hat den Vorteil, dass große Längen der Schaumstoffbahn 2 platzsparend bereitgestellt werden können und dem nachfolgenden Verarbeitungsprozess leicht zugeführt werden können.

Eine auf eine Vorratsrolle 8 aufgewickelte Schaumstoffbahn 2 weist eine Länge zwischen 3 m und 300 m, vorzugsweise zwischen 10 m und 200 m sowie eine Breite zwischen 0,03 m und 3 m, vorzugsweise zwischen 0,1 m und 1,5 m auf. Die Dicke einer Schaumstoffbahn beträgt vorzugsweise zwischen 5 mm und 30 cm, mehr bevorzugt zwischen 1 cm und 12 cm.

Die Schaumstoffbahn 2 wird von der Vorratsrolle 8 abgewickelt und anschließend entlang einer Förderrichtung F den weiteren Fertigungsschritten zugeführt. Dabei erstreckt sich eine Längsrichtung der Schaumstoffbahn 2 parallel zur Förderrichtung F. Die Schaumstoffbahn 2 weist eine Oberseite 10, eine Unterseite 12 und Seitenflanken 14 und 16 auf. Die Oberseite 10 und die Unterseite 12 liegen einander gegenüber und sind beidseitig durch jeweils eine Seitenflanke 14, 16 miteinander verbunden. Die Oberseite 10 und die Unterseite 12 sind dabei wesentlich großflächiger als die Seitenflanken 14, 16. Das heißt, dass die Breite und die Länge der Schaumstoffbahn 2 jeweils viel größer als die Dicke der Schaumstoffbahn 2 sind. Im zur Vorratsrolle 8 aufgewickelten Zustand bildet die Oberseite 10 oder die Unterseite 12 der Schaumstoffbahn 2 eine Mantelfläche der Vorratsrolle 8, während die Seitenflanken 14, 16 jeweils eine Stirnfläche der Vorratsrolle 8 bilden.

In Förderrichtung F stromabwärts der Vorratsrolle 8 erfolgt das Aufbringen der Sperrschicht 6, die in dieser Ausführungsform folienartig ausgebildet ist, auf die Oberseite 10 oder die Unterseite 12 der Schaumstoffbahn 2. In der dargestellten Ausführungsform wird die Sperrschicht 6 auf die Oberseite 10 der ersten Schaumstoffbahn 2 aufgebracht.

Die Sperrschicht 6 ist auf einer Vorratsrolle 18 bereitgestellt. Die Sperrschicht 6 und somit auch die Vorratsrolle 18 weisen dabei vorzugsweise im Wesentlichen dieselbe Breite wie die Schaumstoffbahn 2 auf. Das Bereitstellen der Sperrschicht 6 auf einer Vorratsrolle 18 bietet auch hier den Vorteil, dass große Längen von Sperrschichtmaterial platzsparend bereitgestellt und dem weiteren Herstellungsprozess einfach zugeführt werden können. Hierzu ist die Sperrschicht 6 vorzugsweise bahn- oder folienartig ausgebildet.

Die Sperrschicht 6 wird von der Vorratsrolle 18 abgewickelt, der Oberseite 10 der ersten Schaumstoffbahn 2 zugeführt und mit dieser verbunden. Hierzu kann beispielsweise eine Walze 20 vorgesehen sein, um die die Sperrschicht 6 zumindest teilweise herum geführt wird und die die Sperrschicht 6 auf die Oberseite 10 der Schaumstoffbahn 2 aufbringt. Vorzugsweise wird die Sperrschicht 6 im Bereich der Walze 20 auf die Schaumstoffbahn 2 aufkaschiert. Dem Fachmann sind verschiedene Möglichkeiten bekannt, eine Sperrschicht auf eine Schaumstoffbahn aufzubringen. Beispielsweise kann die Sperrschicht 6 unter dem Einfluss von Druck und Wärme auf die Schaumstoffbahn 2 laminiert werden. Die Sperrschicht 6 kann auch auf die Schaumstoffbahn 2 geklebt werden. Dazu kann die Sperrschicht 6 auf ihrer der Schaumstoffbahn 2 zugewandten Seitenfläche mit einem Klebstoff versehen sein oder selbst eine ausreichende Klebewirkung innehaben. Beispielsweise kann die Sperrschicht 6 durch Erwärmen der Sperrschicht 6 in einen Zustand versetzt werden, der sich zum Verbinden der Sperrschicht 6 mit der Schaumstoffbahn 2 eignet. Alternativ kann die Sperrschicht 6 selbst ein Band oder eine Folie mit klebenden Eigenschaften sein, das auf die Schaumstoffbahn 2 aufgebracht wird. Gegebenenfalls kann die klebende Seite oder können die klebenden Seiten der Sperrschicht mit einer Abziehfolie versehen sein, die vor der Applikation der Sperrschicht auf die Schaumstoffbahn entfernt wird.

In einer weiteren alternativen Ausführungsform (nicht dargestellt) ist die Sperrschicht 6 durch ein klebstoffartiges Medium gebildet, das auf die Schaumstoffbahn 2 aufgebracht wird. Ein klebstoffartiges, flüssiges oder zähflüssiges Medium kann durch entsprechende Werkzeuge, beispielsweise Auftragswalzen, die anstelle der Walze 20 vorgesehen sind und durch entsprechende Klebstoffspeicher beschickt werden, auf die Schaumstoffbahn 2 aufgebracht werden. Ebenso ist es denkbar, dass das klebstoffartige, flüssige oder zähflüssige Medium die Verbindung zwischen Schaumstoff und einer folienartigen Sperrschicht herstellt.

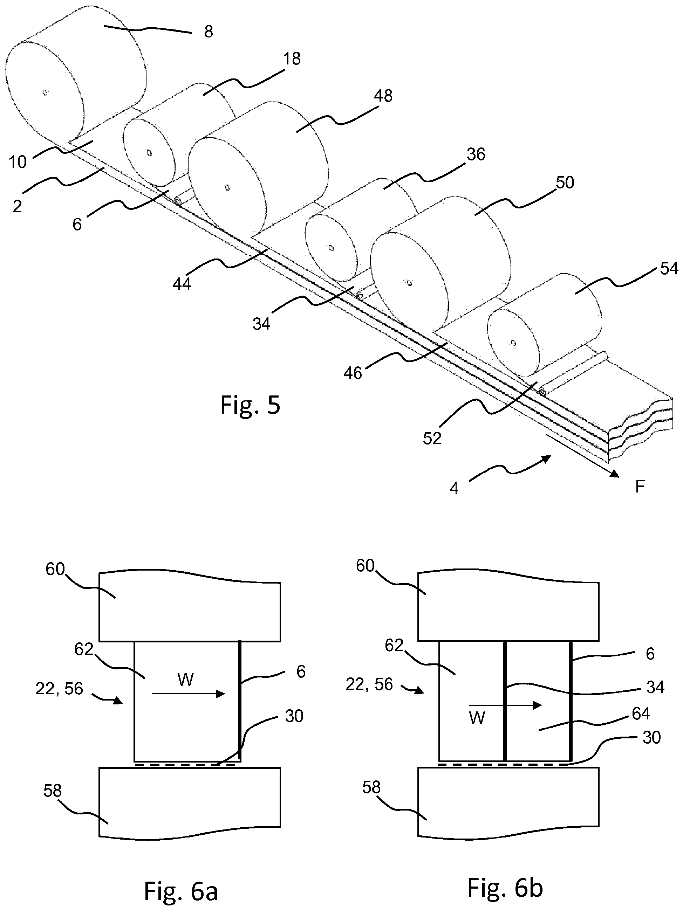

Durch das großflächige und gut zugängliche Aufbringen der Sperrschicht 6 auf die Schaumstoffbahn 2 kann die Zuverlässigkeit des Prozesses erhöht werden und die Qualität der Sperrschicht sowie deren Verbindung zur Schaumstoffbahn 2 ist gut kontrollierbar. Durch das Aufbringen der Sperrschicht 6 auf die Schaumstoffbahn 2 wird die Schaumstoff-Sperrschicht-Bahn 4 gebildet. Dabei sind die Schaumstoffbahn 2 und die Sperrschicht 6 bevorzugt durchgängig fest miteinander verbunden. Die Schaumstoff-Sperrschicht-Bahn 4 umfasst mindestens die Schaumstoffbahn 2 und mindestens eine Sperrschicht 6. In nicht erfindungsgemäßen alternativen Ausführungsformen, die weiter unten unter Bezugnahme auf Fig. 5 und 6b beschrieben werden, umfasst die Schaumstoff-Sperrschicht-Bahn 4 eine Mehrzahl von Schaumstoffbahnen und eine Mehrzahl von Sperrschichten. Die Schaumstoff-Sperrschicht-Bahn 4 wird ebenfalls in Förderrichtung F bewegt.

Fig. 2 zeigt die nachfolgenden Schritte des Erzeugens einer Mehrzahl von Dichtbandstreifen 22 und des Aufwickelns eines Dichtbandstreifens 22 zu einer Rolle 24.

In die Schaumstoff-Sperrschicht-Bahn 4 wird zunächst mindestens ein durchgängiger Schnitt 26 in einer Längsrichtung der Schaumstoff-Sperrschicht-Bahn 4, die parallel zur Förderrichtung F verläuft, und senkrecht zu der mindestens einen Sperrschicht 6 eingebracht. Der mindestens eine Schnitt durchdringt die Schaumstoff-Sperrschicht-Bahn 4 vollständig. Dadurch wird aus der Schaumstoff-Sperrschicht-Bahn 4 eine Mehrzahl von Dichtbandstreifen 22 erzeugt. Das Einbringen des mindestens einen Schnitts 26 kann beispielsweise durch eine Mehrzahl von Schneidwerkzeugen 28, wie z.B. Messer oder Sägen erfolgen. Alternative Mittel zum Einbringen von Schnitten in eine Schaumstoff-Sperrschicht-Bahn bzw. zum Durchtrennen einer Schaumstoff-Sperrschicht-Bahn sind dem Fachmann bekannt.

Die Dichtbandstreifen 22 der Mehrzahl von Dichtbandstreifen 22 weisen vorzugsweise im Wesentlichen dieselbe Breite auf. In der dargestellten Ausführungsform sind die Schneidwerkzeuge 28 hierzu in gleichmäßigen Abständen über die Breite der Schaumstoff-Sperrschicht-Bahn 4 verteilt angeordnet. Die Anzahl an Schneidwerkzeugen 28 richtet sich dabei nach der Breite der Schaumstoff-Sperrschicht-Bahn 4 sowie nach der gewünschten Höhe der zu erzeugenden Dichtbandstreifen 22. Diese können beliebig angepasst werden. Die Breite eines Dichtbandstreifens 22 liegt üblicherweise zwischen 1 cm und 10 cm, vorzugsweise zwischen 2 cm und 8 cm. Diese Breite entspricht der späteren Höhe des Dichtbands im vollständig expandierten Zustand.

Um den Herstellungsprozess möglichst einfach zu gestalten, wird die Schaumstoff-Sperrschicht-Bahn 4 in Förderrichtung F entlang der Schneidwerkzeuge 28 bewegt. Alternativ ist es auch möglich, die Schneidwerkzeuge 28 in eine stillstehende Schaumstoff-Sperrschicht-Bahn 4 einzubringen und die Schneidwerkzeuge 28 zum Bilden des mindestens einen Schnitts 26 zu bewegen. Selbstverständlich können die Schaumstoff-Sperrschicht-Bahn 4 und das mindestens eine Schneidwerkzeug 28 auch gegenläufig bewegt werden.

Der mindestens eine Schnitt 26 erstreckt sich vollständig durch die Schaumstoff-Sperrschicht-Bahn 4 hindurch, d.h. von der Unterseite 12 der Schaumstoffbahn 2 bis zur Oberseite 10 der Schaumstoffbahn 2 und durch die Sperrschicht 6 hindurch.

Nach dem Erzeugen der Mehrzahl von Dichtbandstreifen 22 erfolgt das Aufwickeln jedes Dichtbandstreifens 22 der Mehrzahl von Dichtbandstreifen 22 zu einer Rolle 24. In Fig. 2 ist beispielhaft das Aufwickeln eines Dichtbandstreifens der Mehrzahl von Dichtbandstreifen 22 abgebildet. Es versteht sich, dass die übrigen Dichtbandstreifen 22 ebenfalls zu Rollen 24 aufgewickelt werden.

Das Aufwickeln eines Dichtbandstreifens 22 zu einer Rolle 24 erfolgt derart, dass die mindestens eine Sperrschicht 6 radial verläuft und an einer der beiden axialen Stirnflächen 25a der Rolle 24 angeordnet ist. Dies bietet den Vorteil, dass die Sperrschicht 6 in der Einbausituation einer Rauminnenseite oder einer Raumaußenseite zugewandt ist, wie aus Fig. 6 ersichtlich ist. Vorzugsweise wird der Dichtbandstreifen 22 während des Aufwickelns zur Rolle 24 komprimiert, sodass ein komprimierter Dichtbandstreifen 22 zu einer Rolle aufgewickelt ist. In der dargestellten Ausführungsform bildet die Rolle 24 bereits eine fertige Dichtbandrolle.

In der Regel wird außerdem ein Klebestreifen 30 auf eine Seitenfläche jedes Dichtbandstreifens 22 der Mehrzahl von Dichtbandstreifen 22 aufgebracht, sodass der Klebestreifen 30 senkrecht zu der mindestens einen Sperrschicht 6 des Dichtbandstreifens 22 angeordnet ist. Durch das Aufwickeln des Dichtbandstreifens zu einer Rolle ist der Klebestreifen 30 an einer Mantelfläche der Rolle 24 angeordnet. Das Aufbringen des Klebestreifens 30 kann dabei vor dem oder während des Aufwickelns des Dichtbandstreifens 22 zu einer Rolle 24 erfolgen. Der Klebestreifen 30 wird vorzugsweise auf einer Klebestreifenrolle 32 bereitgestellt und einer Seitenfläche des Dichtbandstreifens 22 zugeführt. Besonders einfach ist es, wenn der Klebestreifen 30 durch ein doppelseitiges Klebeband gebildet ist. Der Klebestreifen 30 kann auf der Oberfläche, die nicht mit dem Dichtbandstreifen 22 zu verbinden ist, mit einem Abdeckstreifen (nicht dargestellt), beispielsweise aus Silikonpapier, bedeckt sein, sodass die einzelnen Windungen der Rolle 24 nicht miteinander verkleben und sich das Dichtband gut von der Rolle 24 abwickeln lässt.

Um eine bessere Zugänglichkeit des jeweils aufzuwickelnden Dichtbandstreifens 22 zu ermöglichen, wird dieser vor dem Aufwickeln zur Rolle 24 derart umgelenkt, dass er schräg zur Förderrichtung F verläuft. In der dargestellten Ausführungsform wird der Dichtbandstreifen 22 im Wesentlichen senkrecht zur Förderrichtung F nach außen umgelenkt. In diesem Fall erstreckt sich der Wickelkern der Rolle 24 in vertikaler Richtung.

Es ist aber auch denkbar, den Dichtbandstreifen 22 nach oben oder nach unten umzulenken (nicht dargestellt). Dann erstreckt sich der Wickelkern der Rolle 24 in horizontaler Richtung.

Um alle Dichtbandstreifen 22 der Mehrzahl von Dichtbandstreifen 22 zu einer Rolle 24 aufzuwickeln, kann es weiterhin vorteilhaft sein, die Dichtbandstreifen 22 der Mehrzahl von Dichtbandstreifen 22 in unterschiedliche Richtungen umzulenken. Alternativ können auch alle Dichtbandstreifen 22 in dieselbe Richtung umgelenkt werden, wobei die jeweiligen Umlenkstellen dann in Förderrichtung F versetzt zueinander anzuordnen sind, sodass sich die einzelnen Dichtbandstreifen 22 nicht gegenseitig behindern.

Um die Anordnung der Sperrschicht 6 an der axialen Stirnfläche der Rolle 24 zu gewährleisten, kann es auch notwendig sein, einen aufzuwickelnden Dichtbandstreifen 22 der Mehrzahl von Dichtbandstreifen 22 vor dem Aufwickeln um 90° bzw. 270° oder ungerade Vielfache von 90° um seine Längsachse zu drehen. Das Drehen des Dichtbandstreifens um 90° bzw. 270° um seine Längsachse kann dabei kurz vor oder nach dem Umlenken des Dichtbandstreifens 22 schräg zur Förderrichtung F erfolgen. Das Drehen eines Dichtbandstreifens 22 um seine Längsachse um 90° bzw. 270° bringt es mit sich, dass eine Seitenfläche des Dichtbandstreifens 22, auf die der Klebestreifen 30 aufzubringen ist, nicht mehr seitlich angeordnet ist, sondern nach oben oder nach unten ausgerichtet ist. Die Zuführung des Klebestreifens 30 und Lagerung der Klebestreifenrolle 32 erfolgt dann in einer Ebene oberhalb oder unterhalb der Ebene der Schaumstoff-Sperrschicht-Bahn 4.

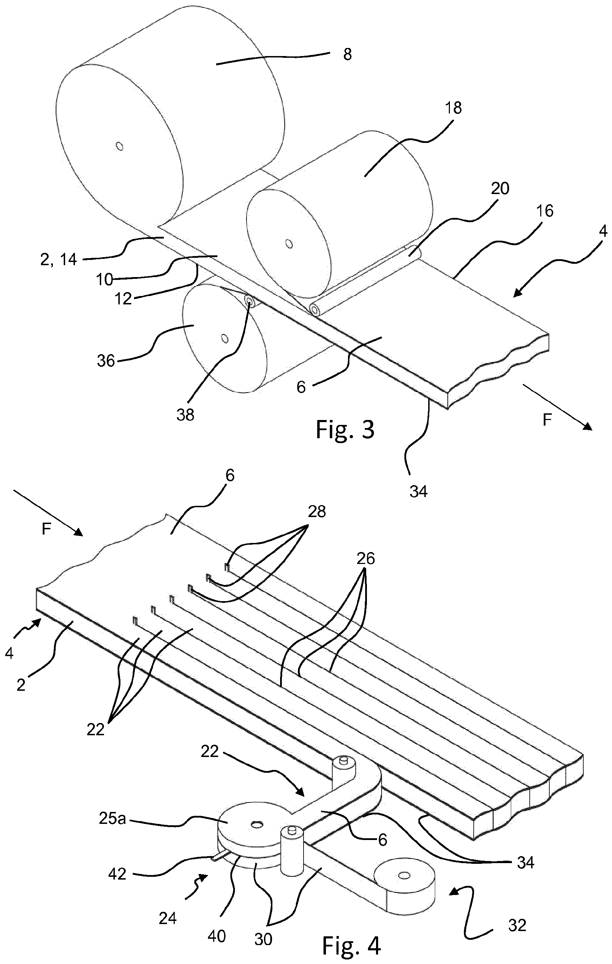

In Fig. 3 ist das Bilden einer Schaumstoff-Sperrschicht-Bahn 4 im Rahmen einer alternativen Ausführungsform der vorliegenden Erfindung dargestellt. Auch in dieser Ausführungsform werden eine Schaumstoffbahn 2 bereitgestellt und eine Sperrschicht 6 entsprechend den Ausführungen zu Fig. 1 auf die Oberseite 10 der Schaumstoffbahn 2 aufgebracht. Diesbezüglich wird vollumfänglich auf die Beschreibung zu Fig. 1 verwiesen, wobei sämtliche Merkmale auch auf diese Ausführungsform zutreffen. Nachfolgend wird im Wesentlichen auf die Unterschiede eingegangen.

Bei der Ausführungsform nach Fig. 3 umfasst das Bilden der Schaumstoff-Sperrschicht-Bahn 4 das Aufbringen einer ersten Sperrschicht 6 auf die Oberseite 10 der ersten Schaumstoffbahn 2 und das Aufbringen einer zweiten Sperrschicht 34 auf die Unterseite 12 der ersten Schaumstoffbahn 2. Die zweite Sperrschicht 34 wird vorzugsweise auf einer Vorratsrolle 36 bereitgestellt. Entsprechend ist die Vorratsrolle 18 oberhalb der Schaumstoffbahn 2 angeordnet und die Vorratsrolle 36 ist unterhalb der Schaumstoffbahn 2 angeordnet. Das Aufbringen der zweiten Sperrschicht 34 auf die Unterseite 12 der Schaumstoffbahn 2 erfolgt dabei entsprechend dem Aufbringen der ersten Sperrschicht 6 auf die Oberseite 10 der Schaumstoffbahn 2, wie zuvor beschrieben. Hierzu kann eine Walze 38 vorgesehen sein, die die Sperrschicht 34 der Unterseite 12 der Schaumstoffbahn 2 zuführt. Insbesondere ist die zweite Sperrschicht 34 vorzugsweise bahn- oder folienartig ausgebildet. Die zweite Sperrschicht 34 wird von der Vorratsrolle 36 abgewickelt, der Unterseite 12 der Schaumstoffbahn 2 zugeführt und mit dieser verbunden. Vorzugsweise wird die zweite Sperrschicht 34 auf die Schaumstoffbahn 2 aufkaschiert. Wie oben beschrieben kann auch die zweite Sperrschicht 34 unter dem Einfluss von Druck und Wärme auf die Schaumstoffbahn 2 laminiert werden oder auf die Schaumstoffbahn 2 geklebt werden. Dazu kann die zweite Sperrschicht 34 mit einem Klebstoff versehen sein, selbst eine ausreichende Klebewirkung innehaben oder selbst ein Klebeband sein, das auf die Schaumstoffbahn 2 aufgebracht wird. Alternativ ist die zweite Sperrschicht 34 durch ein klebstoffartiges Medium gebildet, das flächig auf die Schaumstoffbahn 2 aufgebracht wird.

Die erste und die zweite Sperrschicht 6, 34 können aus demselben Sperrschichtmaterial gebildet sein und dieselben Eigenschaften, insbesondere bezüglich ihrer Dichtwirkung aufweisen. Die erste und die zweite Sperrschicht 6, 34 können aber auch unterschiedliche Eigenschaften aufweisen und/oder aus unterschiedlichen Sperrschichtmaterialien gebildet sein.

Die gemäß Fig. 3 gebildete Schaumstoff-Sperrschicht-Bahn 4 weist folglich eine Sperrschicht 6 auf der Oberseite 10 und eine Sperrschicht 34 auf der Unterseite 12 der Schaumstoffbahn 2 auf. Auch diese Schaumstoff-Sperrschicht-Bahn 4 wird in Förderrichtung F bewegt.

Fig. 4 zeigt das Einbringen von durchgängigen Schnitten 26 in die Schaumstoff-Sperrschicht-Bahn 4 nach Fig. 3 und beispielhaft das Aufwickeln eines Dichtbandstreifens 22 der Mehrzahl von Dichtbandstreifen 22 zu einer Rolle 24. Es versteht sich, dass auch die übrigen Dichtbandstreifen 22 zu Rollen 24 aufgewickelt werden.

Das Erzeugen einer Mehrzahl von Dichtbandstreifen 22 durch Einbringen von mindestens einem durchgängigen Schnitt 26 in die Schaumstoff-Sperrschicht-Bahn 4 in einer Längsrichtung der Schaumstoff-Sperrschicht-Bahn 4 und senkrecht zur ersten und zweiten Sperrschicht 6, 34 erfolgt dabei im Wesentlichen wie zuvor unter Bezugnahme auf Fig. 2 beschrieben, weshalb vollumfänglich auf die diesbezüglichen Ausführungen verwiesen wird. Zu beachten ist jedoch, dass der mindestens eine durchgängige Schnitt nun die erste Schaumstoffbahn 2 und beide Sperrschichten 6, 34 vollständig durchtrennt.

Das Aufwickeln jedes Dichtbandstreifens 22 der Mehrzahl von Dichtbandstreifen 22 zu einer Rolle 24 erfolgt in diesem Fall derart, dass an jeder der beiden axialen Stirnflächen 25a der Rolle 24 jeweils eine aus erster und zweiter Sperrschicht 6, 34 angeordnet ist. Bildet die Rolle 24 die fertige Dichtbandrolle, wird auf diese Weise eine Dichtbandrolle mit zwei außenliegenden, radial verlaufenden Sperrschichten 6, 34 geschaffen.

Zudem kann, wie in Fig. 4 dargestellt, die Rolle 24 durch Einbringen eines radialen Schnitts 40 an einer Stelle axial zwischen den beiden Stirnflächen 25a der Rolle 24 durchtrennt werden. Zum Einbringen des Schnitts 40 sind dem Fachmann verschiedene Mittel bekannt. Insbesondere kann, wie dargestellt, ein weiteres Schneidwerkzeug 42 in Form eines Messers oder einer Säge verwendet werden.

Auf diese Weise ist es möglich, ohne zusätzliche Mittel und Verfahrensschritte mit Ausnahme des Vorsehens von Mitteln zum Einbringen des einen Schnitts 40 in die Rolle 24 zwei Dichtbandrollen aus einem Dichtbandstreifen 22 herzustellen. Insbesondere kann durch das Durchtrennen der Rolle 24 der Schnitt 40 sehr sauber und plan durchgeführt werden, woraus eine perfekte Schnittkante der nicht mit einer Sperrschicht versehenen axialen Stirnfläche der finalen Dichtbandrolle resultiert.

Auch in dieser Ausführungsform kann analog zu den obigen Ausführungen bezüglich Fig. 2 ein Klebestreifen 30 auf eine Seitenfläche des Dichtbandstreifens 22 aufgebracht werden, sodass dieser senkrecht zu den Sperrschichten 6, 34 angeordnet ist. Das Aufbringen des Klebestreifens 30 kann dabei vor dem oder während des Aufwickeln des Dichtbandstreifens 22 zu einer Rolle 24 erfolgen. Besonders einfach ist es, wenn auch dieser Klebestreifen 30 durch ein doppelseitiges Klebeband gebildet ist, das auf der vom Dichtbandstreifen 22 abgewandten Seite mit einem Abdeckstreifen (nicht dargestellt) bedeckt ist.

Für die Umlenkung der Dichtbandstreifen 22 und ihre mögliche Drehung gilt dasselbe wie zu der Ausführungsform der Fig. 2 beschrieben.

Fig. 5 zeigt die Bildung einer Schaumstoff-Sperrschicht-Bahn 4 im Rahmen einer alternativen Ausführungsform eines nicht erfindungsgemäßen Verfahrens. Dabei wird eine mehrlagige Schaumstoff-Sperrschicht-Bahn 4 gebildet, die aus einer Mehrzahl von Schaumstoffbahnen und einer Mehrzahl von Sperrschichten besteht, wobei jeweils eine Sperrschicht zwischen zwei benachbarten Schaumstoffbahnen angeordnet ist. Das Bereitstellen der einzelnen Schaumstoffbahnen und Sperrschichten sowie das Aufbringen der einzelnen Sperrschichten auf die einzelnen Schaumstoffbahnen kann dabei im Wesentlichen wie zuvor unter Bezugnahme auf die Fig. 1 bis 4 beschrieben erfolgen.

Zunächst wird eine Mehrzahl von Schaumstoffbahnen aus weichem Schaumstoff bereitgestellt. Beispielsweise werden eine erste Schaumstoffbahn 2, eine zweite Schaumstoffbahn 44 und eine dritte Schaumstoffbahn 46 bereitgestellt. Die Anzahl an Schaumstoffbahnen kann beliebig gewählt werden. Jede der Schaumstoffbahnen 2, 44, 46 ist bevorzugt auf einer Vorratsrolle bereitgestellt. Genauer ist die erste Schaumstoffbahn 2 auf der Vorratsrolle 8 bereitgestellt, die zweite Schaumstoffbahn 44 ist auf der Vorratsrolle 48 und die dritte Schaumstoffbahn 46 auf der Vorratsrolle 50 bereitgestellt. Die Schaumstoffbahnen 2, 44, 46 können aus demselben Schaumstoff oder aus unterschiedlichen Schaumstoffen gebildet sein.

Zudem wird eine Mehrzahl von Sperrschichten bereitgestellt. In der dargestellten Ausführungsform werden drei Sperrschichten jeweils auf einer Vorratsrolle bereitgestellt. Genauer wird die erste Sperrschicht 6 auf der Vorratsrolle 18, die zweite Sperrschicht 34 auf der Vorratsrolle 36 und die dritte Sperrschicht 52 auf der Vorratsrolle 54 bereitgestellt. Die Sperrschichten 6, 34, 52 können aus demselben Sperrschichtmaterial oder aus unterschiedlichen Sperrschichtmaterialien gebildet sein. Alle Schaumstoffbahnen 2, 44, 46 sowie alle Sperrschichten 6, 34, 52 und die Schaumstoff-Sperrschicht-Bahn 4 werden vorzugsweise in Förderrichtung F bewegt.

Die mehrlagige Schaumstoff-Sperrschicht-Bahn 4 nach Fig. 5 wird nun dadurch gebildet, dass zunächst die Mehrzahl von Schaumstoffbahnen 2, 44, 46 derart angeordnet wird, dass jeweils eine Oberseite einer Schaumstoffbahn 2, 44, 46 einer Unterseite einer angrenzenden Schaumstoffbahn 2, 44, 46 zugewandt ist. In der dargestellten Ausführungsform ist die Oberseite 10 der ersten Schaumstoffbahn 2 einer Unterseite der zweiten Schaumstoffbahn 44 zugewandt. Die Oberseite der zweiten Schaumstoffbahn 44 ist wiederum der Unterseite der dritten Schaumstoffbahn 46 zugewandt. Dadurch wird ermöglicht, dass die Mehrzahl von Schaumstoffbahnen 2, 44, 46 großflächig aufeinander abgelegt werden können. Beliebig viele Schaumstoffbahnen können derart übereinander angeordnet werden.

Das Bilden der Schaumstoff-Sperrschicht-Bahn 4 umfasst weiter das Aufbringen einer Sperrschicht auf jeweils mindestens eine der einander zugewandten Ober- und Unterseiten aneinander angrenzender Schaumstoffbahnen. Dies bedeutet in der dargestellten Ausführungsform, dass zunächst die erste Sperrschicht 6 auf die Oberseite 10 der ersten Schaumstoffbahn 2 oder die Unterseite der zweiten Schaumstoffbahn 44 aufgebracht wird. Anschließend werden die erste und die zweite Schaumstoffbahn 2, 44 einander zugeführt. Die erste und die zweite Schaumstoffbahn 2, 44 werden derart angeordnet, dass die mindestens eine Ober- oder Unterseite der Schaumstoffbahn, die mit der ersten Sperrschicht 6 versehen ist, einer Unter- oder Oberseite der anderen Schaumstoffbahn zugewandt ist. Die erste und die zweite Schaumstoffbahn 2, 44 nehmen die erste Sperrschicht 6 zwischen sich auf. Anschließend werden die erste und die zweite Schaumstoffbahn 2, 44 miteinander verbunden, vorzugsweise mittels der ersten Sperrschicht 6 selbst.

Das Aufbringen weiterer Sperrschichten und Schaumstoffbahnen kann beliebig oft wiederholt werden. Beispielsweise wird gemäß Fig. 5 die zweite Sperrschicht 34 auf die Oberseite der zweiten Schaumstoffbahn 44 oder die Unterseite der dritten Schaumstoffbahn 46 aufgebracht und die zweite und die dritte Schaumstoffbahn 44, 46 werden anschließend einander zugeführt, sodass sie die zweite Sperrschicht 34 zwischen sich aufnehmen.

Schließlich wird eine Sperrschicht 52 auf mindestens eine von den übrigen Schaumstoffbahnen 2, 44 abgewandte Ober- oder Unterseite mindestens einer äußersten Schaumstoffbahn 46 der Mehrzahl von Schaumstoffbahnen 2, 44, 46 aufgebracht. Dadurch weist eine Ober- und/oder Unterseite der gesamten Schaumstoff-Sperrschicht-Bahn 4 eine Sperrschicht 52 auf. Gemäß Fig. 5 wird auf die Oberseite der dritten Schaumstoffbahn 46, die von den übrigen Schaumstoffbahnen 2, 44 abgewandt ist, die dritte Sperrschicht 52 aufgebracht. Zusätzlich oder alternativ zur dritten Sperrschicht 52 kann auch eine Sperrschicht auf der Unterseite der ersten Schaumstoffbahn 2, die von den übrigen Schaumstoffbahnen 44, 46 abgewandt ist, aufgebracht werden.

Die Mehrzahl von Schaumstoffbahnen 2, 44, 46 wird an den einander zugewandten Ober-und Unterseiten miteinander verbunden. Dies kann jeweils schon dann geschehen, wenn zwei Schaumstoffbahnen mit einer zwischenliegenden Sperrschicht zusammengeführt werden, vor allem wenn die Sperrschicht aus einem klebenden Material besteht oder dieses aufweist.

Es ist auch denkbar, dass die gesamte Schaumstoff-Sperrschicht-Bahn 4 mit Druck und/oder Wärme beaufschlagt wird, um die verschiedenen Schichten miteinander zu verbinden.

Es versteht sich, dass nicht alle Schichten nacheinander auf die Oberseite der ersten Schaumstoffbahn 2 aufgebracht werden müssen. Beispielsweise kann eine Sperrschicht auf die Oberseite 10 und eine Sperrschicht auf die Unterseite 12 der ersten Schaumstoffbahn 2 aufgebracht werden und im Anschluss jeweils eine Schaumstoffbahn auf die Oberseite und eine Schaumstoffbahn auf die Unterseite der ersten Schaumstoffbahn 2 aufgebracht werden.

Ebenso können alle Schaumstoffbahnen bereits mit einer Sperrschicht versehen bereitgestellt werden, sodass das Aufbringen der jeweiligen Sperrschicht noch vor dem Bereitstellen der Schaumstoffbahnen erfolgt.

Schließlich ist es auch möglich, die oder jede Sperrschicht erst beim Zusammenführen benachbarter Schaumstoffbahnen in den Zwischenraum zwischen die Schaumstoffbahnen einzuführen und mit den Schaumstoffbahnen gleichzeitig zu verhaften.

Zu beachten ist jedoch stets, dass die gesamte Schaumstoff-Sperrschicht-Bahn 4 schließlich eine Sperrschicht 52 an mindestens ihrer Oberseite oder ihrer Unterseite aufweist.

Nachfolgend wird aus der mehrlagigen Schaumstoff-Sperrschicht-Bahn 4 nach Fig. 5 eine Mehrzahl von Dichtbandstreifen 22 durch Einbringen von mindestens einem durchgängigen Schnitt in die Schaumstoff-Sperrschicht-Bahn 4 in einer Längsrichtung derselben gebildet. Wie zuvor beschrieben, wird jeder Dichtbandstreifen 22 der Mehrzahl von Dichtbandstreifen 22 dann derart zu einer Rolle 24 aufgewickelt, dass die Sperrschichten 6, 34, 52 radial verlaufen und mindestens eine Sperrschicht 6, 34, 52 an einer der beiden axialen Stirnflächen 25a der jeweiligen Rolle 24 angeordnet ist. Ist eine Sperrschicht 6, 34, 52 auf der Oberseite und der Unterseite der mehrlagigen Schaumstoff-Sperrschicht-Bahn 4 nach Fig. 5 angeordnet, können die erzeugten Rollen analog zu der in Fig. 4 dargestellten Rolle durch einen Schnitt an einer Stelle axial zwischen den beiden Stirnflächen 25a der Rolle 24 getrennt werden. Auf diese Weise werden aus einem Dichtbandstreifen 22 zwei Dichtbandrollen mit jeweils einer außenliegenden Sperrschicht 6, 34, 52 gebildet.

Für die Umlenkung der Dichtbandstreifen 22 und ihre mögliche Drehung gilt dasselbe wie zu der Ausführungsform der Fig. 2 beschrieben.

Beim Bilden der Schaumstoff-Sperrschicht-Bahn 4 ist es zusätzlich zu den zuvor beschriebenen Möglichkeiten auch denkbar, dass eine Klebeschicht auf die nicht mit der Sperrschicht versehene Schaumstoffbahn aufgebracht wird, bevor die beiden Schaumstoffbahnen zusammengeführt werden. Gegebenenfalls kann diese Klebeschicht mit einer Abziehfolie bedeckt sein, die vor dem Zusammenführen der Schaumstoffbahnen entfernt wird. Durch die Ausführungsform nach Fig. 5 kann eine Dichtbandrolle hergestellt werden, die neben mindestens einer außen liegenden, radial verlaufenden Sperrschicht auch mindestens eine innen liegende Sperrschicht aufweist.

Fig. 6a zeigt einen Einbauzustand einer Ausführungsform eines erfindungsgemäß hergestellten Dichtbands. Fig. 6b zeigt einen Einbauzustand einer Ausführungsform eines nicht erfindungsgemäß hergestellten Dichtbands. Für den Einbau ist das Dichtband 56 zunächst von der Dichtbandrolle 24 abzuwickeln und in Streifen beliebiger Länge zu schneiden.

Das Dichtband 56 entspricht folglich im Wesentlichen einem zuvor gebildeten Dichtbandstreifen 22. Üblicherweise wird die Länge der Streifen von Dichtband 56 an die Außenkonturen eines abzudichtenden Fensterrahmens oder eines Türrahmens angepasst. Das Dichtband 56 wird dann vorzugsweise mittels des als Klebestreifen 30 fungierenden doppelseitigen Klebebands oder mittels anderer Klebeschichten, Klebebänder oder anderer geeigneter Mittel am Fensterrahmen 58 oder Türrahmen befestigt. Bei der Verwendung eines doppelseitigen Klebebandes als Klebestreifen 30 muss daher lediglich der Abdeckstreifen, mit dem das doppelseitige Klebeband auf seiner vom Dichtbandstreifen 22 abgewandten Seite kaschiert ist, entfernt werden, bevor das Dichtband 56 direkt am Fensterrahmen 58 angebracht werden kann.

In den in den Fig. 6a und 6b abgebildeten Einbauzuständen ist das Dichtband 56 zwischen dem Fensterrahmen 58 und einem Mauerwerk 60 aufgenommen, um die dazwischen liegende Fuge abzudichten. Das in der Fig. 6a abgebildete Dichtband 56 umfasst in diesem Fall einen Schaumstoffstreifen 62 aus der Schaumstoffbahn 2, der mit einer Sperrschicht 6 versehen ist.

Das Dichtband 56 ist so zu verbauen, dass mindestens eine Sperrschicht 6 vom Fensterrahmen 58 zum Mauerwerk 60 und somit im Wesentlichen orthogonal zu einer Funktionsrichtung W des Dichtbands 56 verläuft. Die Funktionsrichtung W erstreckt sich dabei parallel zu den die abzudichtende Fuge bildenden Flächen des Fensterrahmens 58 und des Mauerwerks 60 von einer Raumaußenseite (in Fig. 6a, 6b links) zu einer Rauminnenseite (in Fig. 6a, 6b rechts). Auf diese Weise kann eine zuverlässige Abdichtung gegen Luftzug und Dampfdiffusion gewährleistet werden. Die Sperrschicht 6 ist vorzugsweise an der zur Rauminnenseite gewandten Seite des Dichtbands angeordnet.

In dem in Fig. 6a dargestellten Ausführungsbeispiel bildet genau ein Schaumstoffstreifen 62 zusammen mit genau einer Sperrschicht 6 die Schaumstoff-Sperrschicht-Bahn 4, die zu der Dichtbandrolle aufgewickelt ist. Daneben existieren viele weitere Möglichkeiten des Aufbaus eines erfindungsgemäß hergestellten Dichtbands.

In der Ausführungsform nach Fig. 6b umfasst das Dichtband 56 eine Mehrzahl von Sperrschichten 6, 34 und eine Mehrzahl von Schaumstoffstreifen 62, 64. Dabei ist der erste Schaumstoffstreifen 62 aus der Schaumstoffbahn 2 und der zweite Schaumstoffstreifen 64 aus der Schaumstoffbahn 44 gebildet. Die erste und die zweite Sperrschicht 6, 34 verlaufen vom Fensterrahmen 58 zum Mauerwerk 60 und somit im Wesentlichen orthogonal zur Funktionsrichtung W des Dichtbands 56.

Zur weiteren Gestaltung der Dichteigenschaften des Dichtbandes 56 kann der erste Schaumstoffstreifen 62 aus einem anderen Schaumstoffmaterial bestehen als der zweite Schaumstoffstreifen 64. Ebenso können der erste Schaumstoffstreifen 62 und der zweite Schaumstoffstreifen 64 mit unterschiedlichem Imprägnat imprägniert sein oder auch nur der erste Schaumstoffstreifen 62 oder nur der zweite Schaumstoffstreifen 64 imprägniert sein. In einem weiteren Ausführungsbeispiel kann der erste Schaumstoffstreifen 62 eine andere Farbe als der zweite Schaumstoffstreifen 64 aufweisen. Dadurch kann beispielsweise eine Kennzeichnung der bevorzugten Einbaurichtung des Dichtbands 56 erfolgen.

Die außen am Dichtband angeordnete Sperrschicht 6 ist vorzugsweise an der zur Rauminnenseite gewandten Seite des Dichtbands angeordnet.

Grundsätzlich ist jede beliebige Anzahl an Sperrschichten 6, 34, 52 im Dichtband 56 möglich. Ebenso sind verschiedene Breiten und/oder Höhen des ersten Schaumstoffstreifens 62 und/oder verschiedene Breiten und/oder Höhen des zweiten Schaumstoffstreifens 64 denkbar, auch innerhalb desselben Dichtbandes 56.

Es versteht sich, dass die hierin gemachten Ausführungen zu den einzelnen Schaumstoffbahnen und Sperrschichten, insbesondere hinsichtlich deren Ausbildung, Materialien, Eigenschaften sowie Verbindung miteinander auf alle Schaumstoffbahnen und Sperrschichten der hierin beschriebenen Ausführungsformen zutreffen und einzelne Merkmale der verschiedenen Ausführungsformen beliebig miteinander kombinierbar sind, ohne vom Umfang der Erfindung abzuweichen, der durch die beigefügten Ansprüche definiert ist.

## Patentansprüche

1. Verfahren zur Herstellung von Dichtbandrollen aus weichem, komprimierbarem Schaumstoff mit mindestens einer außenliegenden, radial verlaufenden Sperrschicht (6, 34) mit den folgenden Schritten in der angegebenen Reihenfolge:
- Bereitstellen einer Schaumstoffbahn (2) aus weichem Schaumstoff, wobei die auf eine Vorratsrolle (8) aufgewickelte Schaumstoffbahn (2) eine Länge zwischen 3 m und 300 m sowie eine Breite zwischen 0,03 m und 3 m aufweist;
- Bilden einer Schaumstoff-Sperrschicht-Bahn (4) durch Aufbringen einer Sperrschicht (6, 34) auf eine Oberseite (10) und/oder Unterseite (12) der Schaumstoffbahn (2);
- Erzeugen einer Mehrzahl von Dichtbandstreifen (22) durch Einbringen von mindestens einem durchgängigen Schnitt (26) in die Schaumstoff-Sperrschicht-Bahn (4) in einer Längsrichtung der Schaumstoff-Sperrschicht-Bahn (4) und senkrecht zu der mindestens einen Sperrschicht (6, 34); und
- Aufwickeln jedes Dichtbandstreifens (22) der Mehrzahl von Dichtbandstreifen (22) zu einer Rolle (24) derart, dass die mindestens eine Sperrschicht (6, 34) radial verläuft und an einer der beiden axialen Stirnflächen (25a) der Rolle (24) angeordnet ist.

2. Verfahren nach Anspruch 1, **dadurch gekennzeichnet, dass** das Bilden der Schaumstoff-Sperrschicht-Bahn (4) das Aufbringen einer Sperrschicht (6, 34) auf die Oberseite (10) und die Unterseite (12) der Schaumstoffbahn (2) umfasst; und
das Aufwickeln jedes Dichtbandstreifens (22) der Mehrzahl von Dichtbandstreifen (22) zu einer Rolle (24) derart erfolgt, dass an jeder der beiden axialen Stirnflächen (25a) der Rolle (24) jeweils eine Sperrschicht (6, 34) angeordnet ist.

3. Verfahren nach Anspruch 2, **dadurch gekennzeichnet, dass** das Verfahren weiterhin das Durchtrennen der Rolle (24) durch Einbringen eines radialen Schnitts (40) an einer Stelle axial zwischen den beiden Stirnflächen (25a) der Rolle (24) umfasst.

4. Verfahren nach einem der vorangehenden Ansprüche, **dadurch gekennzeichnet, dass** die Schaumstoffbahn (2) und die Schaumstoff-Sperrschicht-Bahn (4) in eine Förderrichtung (F) bewegt werden, die parallel zu einer Längsrichtung der Schaumstoffbahn (2) und der Schaumstoff-Sperrschicht-Bahn (4) ausgerichtet ist.

5. Verfahren nach einem der vorangehenden Ansprüche, **dadurch gekennzeichnet, dass** mindestens ein Dichtbandstreifen (22) der Mehrzahl von Dichtbandstreifen (22) vor dem Aufwickeln des Dichtbandstreifens (22) um 90° bzw. 270° um seine Längsachse gedreht wird.

6. Verfahren nach einem der vorangehenden Ansprüche, **dadurch gekennzeichnet, dass** mindestens ein Dichtbandstreifen (22) der Mehrzahl von Dichtbandstreifen (22) vor dem Aufwickeln des Dichtbandstreifens (22) derart umgelenkt wird, dass er schräg, bevorzugt senkrecht, zur Förderrichtung (F) verläuft.

7. Verfahren nach einem der vorangehenden Ansprüche, **dadurch gekennzeichnet, dass** das Verfahren das Aufbringen eines Klebestreifens (30) auf eine Seitenfläche jedes Dichtbandstreifens (22) der Mehrzahl von Dichtbandstreifen (22) umfasst, sodass der Klebestreifen (30) senkrecht zu der mindestens einen Sperrschicht (6, 34) des Dichtbandstreifens (22) angeordnet ist.

8. Verfahren nach einem der vorangehenden Ansprüche, **dadurch gekennzeichnet, dass** das Verfahren weiterhin das Imprägnieren der Schaumstoffbahn (2) vor dem Aufbringen der Sperrschicht oder Sperrschichten (6, 34) umfasst.

9. Verfahren nach einem der vorangehenden Ansprüche, **dadurch gekennzeichnet, dass** die Sperrschicht oder Sperrschichten (6, 34) durch Folienbahnen, Klebebänder oder klebstoffartige Medien oder Kombinationen davon gebildet sind.

## Claims

1. Method for producing sealing tape rolls from soft, compressible foam with at least one external, radially running barrier layer (6, 34), comprising the following steps in the stated sequence:
- providing a foam web (2) made of soft foam, wherein the foam web (2) wound up onto a supply roll (8) has a length between 3 m and 300 m and a width between 0.03 m and 3 m;
- forming a foam/barrier layer web (4) by applying a barrier layer (6, 34) to a top side (10) and/or bottom side (12) of the foam web (2);
- creating a plurality of sealing tape strips (22) by introducing at least one continuous cut (26) into the foam/barrier layer web (4) in a longitudinal direction of the foam/barrier layer web (4) and perpendicular to the at least one barrier layer (6, 34); and
- winding up each sealing tape strip (22) of the plurality of sealing tape strips (22) to form a roll (24), in such a manner that the at least one barrier layer (6, 34) runs radially and is arranged on one of the two axial end faces (25a) of the roll (24).

2. Method according to Claim 1, **characterized in that** the forming of the foam/barrier layer web (4) comprises applying a barrier layer (6, 34) to the top side (10) and the bottom side (12) of the foam web (2); and each sealing tape strip of the plurality of sealing tape strips (22) is wound up to form a roll (24) in such a manner that in each case a barrier layer (6, 34) is arranged on each of the two axial end faces (25a) of the roll (24).

3. Method according to Claim 2, **characterized in that** the method furthermore comprises severing the roll (24) by introducing a radial cut (40) at a location axially between the two end faces (25a) of the roll (24).

4. Method according to one of the preceding claims, **characterized in that** the foam web (2) and the foam/barrier layer web (4) are moved in a conveying direction (F) oriented parallel to a longitudinal direction of the foam web (2) and the foam/barrier layer web (4).

5. Method according to one of the preceding claims, **characterized in that** at least one sealing tape strip (22) of the plurality of sealing tape strips (22) is rotated by 90° or 270° about its longitudinal axis before winding up the sealing tape strip (22).

6. Method according to one of the preceding claims, **characterized in that** at least one sealing tape strip (22) of the plurality of sealing tape strips (22) is deflected, before winding up the sealing tape strip (22), in such a manner that it runs obliquely, preferably perpendicularly, with respect to the conveying direction (F).

7. Method according to one of the preceding claims, **characterized in that** the method comprises applying an adhesive strip (30) to a side surface of each sealing tape strip (22) of the plurality of sealing tape strips (22), such that the adhesive strip (30) is arranged perpendicular to the at least one barrier layer (6, 34) of the sealing tape strip (22).

8. Method according to one of the preceding claims, **characterized in that** the method furthermore comprises impregnating the foam web (2) before applying the barrier layer or barrier layers (6, 34).

9. Method according to one of the preceding claims, **characterized in that** the barrier layer or barrier layers (6, 34) are formed by film webs, adhesive tapes or adhesive-like media, or combinations thereof.

## Revendications

1. Procédé servant à fabriquer des rouleaux de bande d'étanchéité à partir de mousse souple compressible avec au moins une couche formant barrière (6, 34) située à l'extérieur, s'étendant de manière radiale, avec les étapes suivantes dans l'ordre indiqué :
- fourniture d'une bande de mousse (2) composée de mousse souple, dans lequel la bande de mousse (2) enroulée sur un rouleau de dévidage (8) présente une longueur entre 3 m et 300 m ainsi qu'une largeur entre 0,03 m et 3 m,
- formation d'une bande (4) de mousse/couche formant barrière en appliquant une couche formant barrière (6, 34) sur un côté supérieur (10) et/ou un côté inférieur (12) de la bande de mousse (2),
- production d'une multitude de rubans de bande d'étanchéité (22) en pratiquant au moins une coupe (26) continue dans la bande (4) de mousse/couche formant barrière dans un sens longitudinal de bande (4) de mousse/couche formant barrière et de manière perpendiculaire par rapport à l'au moins une couche formant barrière (6, 34) et
- enroulement de chaque ruban de bande d'étanchéité (22) de la multitude de rubans de bande d'étanchéité (22) en un rouleau (24) de telle manière que l'au moins une couche formant barrière (6, 34) s'étend de manière radiale et est disposée au niveau d'une des deux surfaces frontales (25a) axiales du rouleau (24).

2. Procédé selon la revendication 1, **caractérisé en ce que** la formation de la bande (4) de mousse/couche formant barrière comprend l'application d'une couche formant barrière (6, 34) sur le côté supérieur (10) et le côté inférieur (12) de la bande de mousse (2) et l'enroulement de chaque ruban de bande d'étanchéité (22) de la multitude de rubans de bande d'étanchéité (22) en un rouleau (24) est effectué de telle manière que respectivement une couche formant barrière (6, 34) est disposée au niveau de chacune des deux surfaces frontales (25a) axiales du rouleau (24).

3. Procédé selon la revendication 2, **caractérisé en ce que** le procédé comprend par ailleurs le sectionnement du rouleau (24) en pratiquant une coupe (40) radiale au niveau d'un emplacement de manière axiale entre les deux surfaces frontales (25a) du rouleau (24).

4. Procédé selon l'une quelconque des revendications précédentes, **caractérisé en ce que** la bande de mousse (2) et la bande (4) de mousse/couche formant barrière sont déplacées dans un sens de transport (F), qui est orienté de manière parallèle par rapport à un sens longitudinal de la bande de mousse (2) et de la bande (4) de mousse/couche formant barrière.

5. Procédé selon l'une quelconque des revendications précédentes, **caractérisé en ce qu'**au moins un ruban de bande d'étanchéité (22) de la multitude de rubans de bande d'étanchéité (22) est tourné de 90° ou 270° autour de son axe longitudinal avant l'enroulement du ruban de bande d'étanchéité (22).

6. Procédé selon l'une quelconque des revendications précédentes, **caractérisé en ce qu'**au moins un ruban de bande d'étanchéité (22) de la multitude de rubans de bande d'étanchéité (22) est dévié avant l'enroulement du ruban de bande d'étanchéité (22) de telle manière qu'il s'étend de manière inclinée, de manière préférée de manière perpendiculaire, par rapport au sens de transport (F).

7. Procédé selon l'une quelconque des revendications précédentes, **caractérisé en ce que** le procédé comprend l'application d'un ruban adhésif (30) sur une surface latérale de chaque ruban de bande d'étanchéité (22) de la multitude de rubans de bande d'étanchéité (22) de sorte que le ruban adhésif (30) est disposé de manière perpendiculaire par rapport à l'au moins une couche formant barrière (6, 34) du ruban de bande d'étanchéité (22).

8. Procédé selon l'une quelconque des revendications précédentes, **caractérisé en ce que** le procédé comprend par ailleurs l'imprégnation de la bande de mousse (2) avant l'application de la couche formant barrière ou des couches formant barrières (6, 34).

9. Procédé selon l'une quelconque des revendications précédentes, **caractérisé en ce que** la couche formant barrière ou les couches formant barrière (6, 34) sont formées par des bandes de film, des bandes adhésives ou des produits de type colle ou des combinaisons de ceux-ci.
